# FASCICULE DE BREVET EUROPEEN

(11) **EP 0 662 788 B1**
(45) Date de publication et mention de la délivrance du brevet: **17.03.1999**
(21) Numéro de dépôt: 94920864.9
(22) Date de dépôt: 26.07.1994
(51) Int. Cl.: A23L 1/18

(54) **PROCEDE DE PREPARATION DE PRODUIT ALIMENTAIRE A REHYDRATATION RAPIDE SUSCEPTIBLE D'ETRE AJOUTE A DES POTAGES ET SOUPES INSTANTANES**
VERFAHREN ZUR HERSTELLUNG VON SCHNELL REHYDRIERBAREM NAHRUNGSMITTEL ALS ZUSATZ FÜR INSTANTSUPPE
PROCESS FOR PREPARING RAPIDLY REHYDRATABLE FOODSTUFF FOR ADDING TO INSTANT SOUP OR THE LIKE

(30) Priorité: 11.08.1993 CH 2384/93
(43) Date de publication de la demande: 19.07.1995
(73) Titulaire: SOCIETE DES PRODUITS NESTLE S.A., 1800 Vevey (CH)
(72) Inventeur: DESJARDINS, Jean-Jacques, CH-1026 Denges (CH); DUPART, Pierre, CH-1028 Préverenges (CH)
(74) Mandataire: Wavre, Claude-Alain
(86) Numéro de dépôt international: CH9400155
(87) Numéro de publication internationale: WO9504475

(56) Documents cités:
- EP-A- 0 113 056
- WO-A-84/03421
- GB-A- 2 136 666
- GB-A- 2 176 089
- US-A- 4 394 397
- US-A- 4 568 550
- US-A- 4 891 238
- PATENT ABSTRACTS OF JAPAN vol. 14, no. 582 (C-0792) 26 Décembre 1990 & JP,A,02 255 052 (KUNOOLE SHOKUHIN) 15 Octobre 1990
- DATABASE WPI Week 8733, 1987 Derwent Publications Ltd., London, GB; AN 87-232919 & JP,A,62 158 444 (SHOKUHIN SANGYO EXTRUSION) 14 Juillet 1987

## Description

La présente invention a trait à un produit alimentaire nouveau ainsi qu'à un procédé pour sa préparation. La présente invention a plus particulièrement trait à un produit à réhydratation rapide susceptible d'être ajouté dans des potages ou soupes instantanés.

Il est connu de préparer des pâtes pouvant se réhydrater rapidement en quelques minutes après l'ajout d'eau chaude, lesdites pâtes présentant toutefois une épaisseur faible, de l'ordre de 0,8-1,2 mm de manière à faciliter ladite réhydratation. Il est connu que si lesdites pâtes présentent une épaisseur plus importante, de l'ordre de 1,5 mm, voire plus, une réhydratation totale n'est plus possible, la pâte présentant une partie non réhydratée dure. De plus, lorsque l'on rajoute l'eau chaude auxdites pâtes, celles-ci restent posées sur le fond du bol ou de l'assiette.

EP113056 (SOCIETE DES PRODUITS NESTLE S.A.) décrit un biscuit composé de granules d'une base cuite et expansée par cuisson-extrusion enrobés d'un liant et agglomérés.

US4891238 (Kurokawa et al.) décrit un procédé de préparation d'un produit cuit-extrudé expansé utilisable comme croutons à partir d'un mélange à base de féculent et/ou de protéine contenant de la poudre d'os ou de coquille d'oeuf.

WO8403421 (PFANNI) décrit la production par cuisson-extrusion de granules expansés de pain utilisable dans un mélange pour boulettes de pain comprenant par ailleurs des ingrédients usuels pour ce type de produit tels que lait, oeuf et fines herbes.

GB2176089 (VINCENT PROCESSES) décrit un procédé et une filière de production par cuisson-extrusion de croutons expansés de grandes dimensions.

US4568550 (Fulger et al.) décrit la production de pain à texture tendre et alvéolée par cuisson-extrusion. Ce pain peut être transformé ensuite en panure par séchage, découpage et toastage.

JP62158444 (SHOKUIN SANGYO EXTRUSION) décrit la production de croutons par cuisson-extrusion d'un mélange d'amidon et d'eau.

JP2255052 (KUNOOLE SHOKUIN) décrit la production de croutons par cuisson-extrusion d'un mélange de farine, eau et une relativement faible quantité de matière grasse.

La demanderesse s'est posé le problème de préparer un produit alimentaire susceptible d'être ajouté à une soupe instantanée et de flotter dessus tout en gardant sa forme durant quelques minutes, ledit produit pouvant présenter une épaisseur allant jusqu'à 5 mm, tout en conservant son caractère d'instantanéité lorsqu' on le réhydrate.

L'objet de l'invention est un procédé pour la préparation dudit produit alimentaire, dans lequel on prépare un mélange comprenant une mouture de céréales, une source de matière grasse et un agent de charge choisi dans le groupe constitué par les protéines et les glucides de manière à obtenir un taux d'humidité en sortie d'extrudeur de 10-16% en poids et un taux de matière grasse totale de 6-14% en poids du mélange sec, et l'on forme et cuit le mélange dans un cuiseur-extrudeur bi-vis, à une température de 80-160°C, sous une pression de 60-150 bar, puis ou sèche le produit, de manière à obtenir un produit ayant la forme désirée, une épaisseur de 1,5-5,0 mm et un poids spécifique de 150-500 g/l.

La demanderesse a constaté que, de façon surprenante, le produit alimentaire ainsi préparé est d'une part facilement réhydratable tout en présentant une épaisseur importante, mais de plus présente la caractéristique particulièrement remarquable de flotter à la surface du liquide, et ce de manière durable.

Un avantage de l'invention est de proposer un procédé rapide pour la fabrication dudit produit alimentaire, ledit procédé se décomposant en une étape de cuisson-extrusion d'une durée de l'ordre de la minute et en une étape de séchage, simple, d'une durée de l'ordre de 3-15 minutes selon le procédé employé et le produit final souhaité. Un autre avantage de l'invention est de diminuer les risques de bris du produit, notamment lors de l'étape de séchage, bris généralement lié à la faible épaisseur du produit.

Dans la suite de la présente description, les pourcentages et parties sont donnés en poids.

Ainsi, pour mettre en oeuvre le procédé selon la présente invention, on prépare un mélange comprenant une mouture de céréales, une source de matière grasse et un agent de charge choisi dans le groupe constitué par les protéines et les glucides.
On peut choisir tout type de mouture de céréales, tel que farine ou semoule de blé, de maïs ou d'orge, par exemple.

La source de matière grasse est de préférence une source d'acides gras saturés stables, telle que l'huile de palme hydrogénée. On choisit ladite source de matière grasse de manière à éviter le rancissement du produit avant ou après sa préparation.
On choisit l'agent de charge dans le groupe constitué par les protéines et les glucides.
La fonction de cet agent de charge est, entre autre, de permettre de diminuer la viscosité de la pâte dans l'extrudeur de manière à en permettre la découpe, de régler la densité apparente du produit obtenu et éventuellement de lui conférer certaines qualités organoleptiques telles que couleur et/ou croustillance.
Cet agent de charge peut comprendre des protéines animales ou végétales telles que le lait écrémé en poudre et/ou des glucides tels que le son, la farine d'avoine ou de soja, le saccharose ou le glucose, par exemple.

Dans un mode de réalisation préféré, on prépare un mélange sec comprenant 35-50 parties de mouture de céréales et 5-15 parties d'agent de charge. De préférence également, cet agent de charge comprend 2,5-5,5 parties de farine d'avoine, 0-7,0 parties de saccharose ou de glucose et 0,5-3,0 parties de lait écrémé en poudre.

On introduit le mélange sec ainsi préparé, ainsi que de l'eau et une source de matière grasse, dans un cuiseur-extrudeur bi-vis.
On peut introduire environ 5-15 parties d'un mélange émulsionné d'eau et de matière grasse pour 50 parties du mélange sec.
La cuisson-extrusion est effectuée à 80-160°C et sous une pression de 60-150 bar, pendant généralement 30 à 90 secondes.
On utilise généralement une vitesse de rotation des vis usuelle, de l'ordre de 200-400 tours par minute. Le mélange cuit est alors coupé à la sortie de l'extrudeuse, d'une manière usuelle. Il présente généralement un taux d'humidité de l'ordre de 10-16%.

On peut alors sécher ce produit par tout moyen connu, par exemple à l'aide d'un lit fluidisé à une température de 80-130°C de manière à obtenir un produit présentant un taux d'humidité de 1-3%.

La présente invention permet l'obtention d'un produit croustillant qui peut présenter une épaisseur pouvant aller jusqu'à 5 mm, et un poids spécifique de 150-500 g/l.

On peut utiliser ce produit par exemple dans une soupe déshydratée que l'on peut reconstituer par addition d'eau chaude et attente de 4-6 minutes, ou bien par addition d'eau froide et passage au four micro-ondes.
On constate alors que le produit flotte à la surface du liquide et conserve sa forme originelle après au moins 5 minutes de trempage dans le liquide.
De plus, le produit ne se désagrège pas au contact de l'eau ou de la cuillère et ne prend pas une texture en bouche gommeuse, mais conserve une texture ferme adéquate.

On peut également ajouter ce produit dans une salade, où il peut remplacer les croûtons de pain rôtis traditionnellement ajoutés.
Dans ce cas, on peut aromatiser le produit lors de sa préparation, comme souhaité.
Cette utilisation est rendue possible par le fait que le produit selon l'invention présente une texture ferme et croustillante après sa préparation, et peut donc être dégusté tel quel.

L'invention est illustrée plus en détail dans les exemples de réalisation suivants.

### Exemple 1

On prépare un mélange comprenant 38 kg d'une mouture de céréales constituée d'un mélange de semoule de maïs et de farine de blé, 9 kg d'un mélange de 1,5 kg de poudre de lait écrémé, 3,7 kg de saccharose et 4 kg de farine d'avoine, et 1 kg de chlorure de sodium.
On introduit ce mélange dans un cuiseur-extrudeur bi-vis, ainsi que 4 kg d'huile de palme hydrogénée (soit 8% environ) et 6 litre d'eau.
La cuisson-extrusion est effectuée à une température de 110-120°C, sous une pression de 100-105 bar, avec une vitesse de rotation des vis de 250 tours par minute.

Ladite cuisson-extrusion dure entre 30 et 50 secondes environ.
Le mélange cuit/extrudé sort de l'extrudeuse par une filière d'extrusion possédant la forme requise, puis est coupé juste après sa sortie.
On obtient ainsi un produit qui présente un taux d'humidité de 12-14%, et que l'on sèche sur lit fluidisé à 100°C pendant 15 minutes environ de manière à obtenir un produit final dont le taux d'humidité est de 3%.
Le produit final ainsi obtenu est croustillant et présente une épaisseur de 3 mm, en son centre, qui correspond au point le plus épais et un poids spécifique de 260 g/l.

### Exemple 2

On prépare un produit selon l'invention de manière analogue à l'exemple précédent, en faisant varier les conditions d'extrusion (température ou pression), ainsi que les teneurs en matière grasse et en eau du mélange avant extrusion.

On obtient les résultats suivants:
a) Variation de la température (ou de la pression) lors de l'extrusion, toutes choses égales à l'exemple 1 par ailleurs.
   . 70°C, 110 bar (ou 60 bar, 100°C): une partie du produit ne flotte plus à la surface du liquide et "coule" dans le fond du bol.
   . 100°C, 110 bar: produit croustillant qui flotte, texture en bouche ferme après trempage pendant 5 minutes.
   . 170°C, 110 bar (ou 160 bar, 100°C): le produit final perd sa forme et se désagrège lorsque qu'il est mis à tremper dans un liquide pendant 5 minutes.
b) Variation de la quantité de matière grasse ajoutée au mélange sec, toutes choses égales à l'exemple 1 par ailleurs.
   . moins de 5%: le produit final est très expansé; il perd sa forme et se désagrège lorsque qu'il est mis à tremper dans un liquide pendant 5 minutes.
   . 8%: produit croustillant, qui flotte, texture en bouche ferme après trempage.
   . plus de 15%: produit dense; une partie du produit ne flotte plus à la surface du liquide et "coule" dans le fond du bol.
c) Variation de la quantité d'eau ajoutée au mélange, toutes choses égales à l'exemple 1 par ailleurs.
   . taux d'humidité inférieur à 8% en sortie d'extrudeur: le produit final perd sa forme et se désagrège lorsque qu'il est mis à tremper dans un liquide pendant 5 minutes.
   . 12% environ: produit croustillant, qui flotte, texture en bouche ferme après trempage.
   . taux d'humidité supérieur à 18% en sortie d'extrudeur: une partie du produit ne flotte plus à la surface du liquide et "coule" dans le fond du bol.

On remarque donc que pour certaines valeurs limites, le produit obtenu est soit trop dur et trop dense, donc est difficile à couper à la sortie de l'extrudeur et "coule" en partie dans le bol, ou bien le produit est trop expansé et se désagrège rapidement au contact d'un liquide.

### Exemple 3

On prépare un mélange comprenant 43 kg d'une mouture de céréales constituée d'un mélange de semoule de maïs et de farine de blé, 4 kg d'un mélange de 1 kg de poudre de lait écrémé et 3 kg de farine d'avoine, et 1 kg de chlorure de sodium.
On introduit ce mélange dans un cuiseur-extrudeur bi-vis, ainsi que 10-12 kg d'un mélange émulsionné d'huile de palme hydrogénée et d'eau.
La cuisson-extrusion est effectuée à une température de 110-125°C, sous une pression de 100-120 bar, avec une vitesse de rotation des vis de 250 tours par minute.

Ladite cuisson-extrusion dure entre 30 et 50 secondes environ.
Le mélange cuit/extrudé sort de l'extrudeuse par une filière d'extrusion possédant la forme requise, puis est coupé juste après sa sortie.
On obtient ainsi un produit qui présente un taux d'humidité de 10-12%, et que l'on sèche sur lit fluidisé à 100-120°C pendant 15 minutes environ de manière à obtenir un produit final dont le taux d'humidité est de 3%.

Le produit final ainsi obtenu présente une épaisseur de 3,5 mm en son point le plus épais et un poids spécifique de 350 g/l.

Le produit ainsi préparé peut se conserver plusieurs mois à température ambiante dans un emballage adéquat.
On peut ajouter le produit ainsi préparé à une soupe déshydratée et le conserver ainsi.
On reconstitue la soupe par ajout de 150 ml d'eau chaude à 20 g de soupe déshydratée, et attente de 5 minutes.
On remarque que le produit selon l'invention flotte à la surface de la soupe pendant au moins tout le temps de sa reconstitution ainsi que pendant sa dégustation.
Après 5 minutes de trempage dans la soupe chaude, le produit présente toujours une texture acceptable en bouche. Il ne se désagrège pas au contact du liquide ou de la cuillère, et ne présente pas une texture "gommeuse".

### Exemple 4

On prépare un mélange comprenant 40 kg d'une mouture de céréales constituée d'un mélange de semoule de maïs et de farine de blé, 7 kg d'un mélange de poudre de lait écrémé, de saccharose et de farine d'avoine, et 1 kg de chlorure de sodium, ainsi que des agents aromatisants.
On introduit ce mélange dans un cuiseur-extrudeur bi-vis, ainsi que 7-10 kg d'une émulsion d'huile de palme hydrogénée et d'eau.
La cuisson-extrusion est effectuée à une température de 115-130°C, sous une pression de 100-130 bar, avec une vitesse de rotation des vis de 250 tours par minute.
Ladite cuisson-extrusion dure entre 30 et 50 secondes environ.
Le mélange cuit/extrudé sort de l'extrudeuse par une filière d'extrusion possédant la forme requise, puis est coupé juste après sa sortie.

On obtient ainsi un produit qui présente un taux d'humidité de 7-12%, et que l'on sèche sur lit fluidisé à 100-120°C pendant 15 minutes environ de manière à obtenir un produit final dont le taux d'humidité est de 3-5%.
Le produit final ainsi obtenu présente une épaisseur de 4,0 mm en son point le plus épais et un poids spécifique de 180 g/l.

On peut ajouter le produit ainsi obtenu à une salade déjà préparée.
Le produit selon l'invention conserve son caractère croustillant.

## Revendications

1. Procédé de préparation d'un produit alimentaire à réhydratation rapide et pouvant flotter à la surface d'un liquide, dans lequel on prépare un mélange comprenant une mouture de céréales, une source de matière grasse et un agent de charge choisi dans le groupe constitué par les protéines et les glucides de manière à obtenir un taux d'humidité en sortie d'extrudeur de 10-16% en poids et un taux de matière grasse totale de 6-14% en poids du mélange sec, et l'on forme et cuit le mélange dans un cuiseur-extrudeur bi-vis, à une température de 80-160°C, sous une pression de 60-150 bar, puis ou sèche le produit, de manière à obtenir un produit ayant la forme désirée, une épaisseur de 1,5-5,0 mm et un poids spécifique de 150-500 g/l.

2. Procédé selon la revendication 1, dans lequel ladite mouture de céréales est une farine de blé, de maïs ou d'orge.

3. Procédé selon la revendication 1, dans lequel on prépare un mélange sec comprenant 35-50 parties de mouture de céréales et 5-15 parties d'agent de charge, et l'on introduit dans ledit cuiseur-extrudeur bi-vis le mélange sec ainsi que de l'eau et de la matière grasse.

4. Procédé selon la revendication 3, dans lequel ledit agent de charge comprend 2,5-5,5 parties en poids de farine d'avoine, 0-7,0 parties en poids de saccharose ou de glucose et 0,5-3,0 parties en poids de lait écrémé en poudre.

## Claims

1. Process for preparing a food product which can be rapidly rehydrated and can float on the surface of a liquid, wherein a mixture is prepared comprising a milled cereal, a source of fats and a filling agent selected from the group consisting of proteins and carbohydrates so as to obtain a moisture content at the outlet from the extruder of 10-16 % by weight and a total fat content of 6-14 % by weight of the dry mixture, and the mixture is formed and cooked in a twin-screw extruder-cooker at a temperature of 80-160°C under a pressure of 60-150 bar, and the product is then dried so as to obtain a product having the desired form, a thickness of 1.5-5.0 mm and a density of 150-500 g/l.

2. Process according to claim 1, wherein the said milled cereal is a wheat, maize or barley flour.

3. Process according to claim 1, wherein a dry mixture is prepared including 35-50 parts of milled cereals and 5-15 parts of filling agent, and the dry mixture as well as water and fats are introduced into the said twin-screw extruder-cooker.

4. Process according to claim 3, wherein the said filling agent includes 2.5-5.5 parts by weight of oat flour, 0-7.0 parts by weight of sucrose or glucose and 0.5-3.0 parts by weight of powdered skimmed milk.

## Patentansprüche

1. Verfahren zur Herstellung eines Lebensmittelprodukts mit schneller Rehydratation und der Fähigkeit, auf der Oberfläche einer Flüssigkeit zu schwimmen, bei dem man ein Gemisch herstellt, das ein Getreidemahlgut, eine Quelle für ein Fett und ein Füllmittel enthält, das aus der Gruppe ausgewählt ist, die von den Proteinen und Kohlenhydraten gebildet wird, so daß man am Austritt des Extruders einen Feuchtigkeitsgehalt von 10 bis 16 Gew.-% und einen Gesamt-Fettgehalt von 6 bis 14 Gew.-% des trockenen Gemischs erhält, daß man dieses Gemisch in einem Zweischnecken-Kochextruder bei einer Temperatur von 80-160°C unter einem Druck von 60-150 bar ausformt und gart und das Produkt trocknet, und zwar so, daß man ein Produkt mit der gewünschten Form, einer Dicke von 1,5-5,0 mm und einem spezifischen Gewicht von 150-500 g/l erhält.

2. Verfahren nach Anspruch 1, bei dem das Getreidemahlgut ein Weizen-, Mais- oder Gerstenmehl ist.

3. Verfahren nach Anspruch 1, bei dem man ein trockenes Gemisch herstellt, das 35-50 Teile Getreidemahlgut und 5-15 Teile Füllmittel enthält, und daß man das trockene Gemisch sowie Wasser und Fett in den Zweischnecken-Kochextruder eingibt.

4. Verfahren nach Anspruch 3, bei dem das Füllmittel 2,5-5,5 Gewichtsteile Hafermehl, 0-7,0 Gewichtsteile Saccharose oder Glucose und 0,5-3,0 Gewichtsteile Magermilchpulver umfaßt.
